# EUROPEAN PATENT APPLICATION

(11) **EP 2 645 514 A1**
(43) Date of publication of application: **02.10.2013**
(21) Application number: 12305375.3
(22) Date of filing: 30.03.2012
(51) Int. Cl.: H02J 3/14, H02J 7/00, B60L 11/18

(54) **Method and apparatus for controlling battery chargers**

(71) Applicant: EH Europe GmbH, 8001 Zürich (CH)
(72) Inventor: Kechmire, Mohamed, 62033 Arras (FR); Letombe, David, 62033 Arras (FR); Beaucamp, François, 62033 Arras (FR); Duhaut, Francis, 62033 Arras (FR)
(74) Representative: Williams, Rhys Nicholas

(57) **Abstract**

The invention provides a method and apparatus for operating a battery charging station. The battery charging station comprises a master controller (12) and a plurality of slave chargers (16), wherein the master controller is configured for communication with the plurality of slave chargers. The method includes the following steps. Each of the plurality of slave chargers sends operational information to the master controller. The master controller collates the operational information provided by each of the slave chargers, and the master controller modifies the operational parameters of one or more of the slave chargers in dependence on the collated operational information. This allows the maximum power consumed by a battery charging station to be maintained below a threshold value.

## Description

### Field of the Invention

The present invention concerns a method and apparatus for controlling battery chargers. More particularly, but not exclusively, this invention concerns a method and apparatus for controlling a plurality of battery chargers at a battery charging station.

### Background of the Invention

A typical use of batteries in an industrial setting is for powering forklift trucks in a warehouse. A single warehouse may require several forklift trucks to be operating at a single time, with the result that a battery charging station or room needs to be provided in order to charge the forklift truck batteries after use. Such charging stations comprise a plurality of battery chargers, each charger capable of charging a single battery. During a charging period, there may, for example, be 10, 50, 100 or more batteries being charged simultaneously at the charging station.

It will be recognised that such a charging station may make high demands on the mains power supply. To prevent the charging station causing problems with the power supply due to excessive demand, a utility company may put a limit on the power that an industrial user is allowed to draw from the mains supply. If the power demand of the industrial user exceeds the maximum allowed value, the industrial user may incur fines or other penalties incurred by the utility company.

More generally, when charging a number of batteries at a charging station, it may be difficult to monitor the progress of each of the charging operations. It may be desirable to monitor the progress of each of the charging stations to enable a user to select the battery with a complete or highest charge when taking one for operation.

The present invention seeks to mitigate the above-mentioned problems.

### Summary of the Invention

The present invention provides, according to a first aspect, a method of operating a battery charging station, wherein the battery charging station comprises a master controller and a plurality of slave chargers, the master controller configured for communication with the plurality of slave chargers, the method comprising the following steps:
each of the plurality of slave chargers sending operational information to the master controller;
the master controller collating the operational information provided by each of the slave chargers;
the master controller modifying the operational parameters of one or more of the slave chargers in dependence on the collated operational information.

Preferably, each slave charger includes charging apparatus configured for connection with a battery. Connecting a battery to a slave charger may prompt the slave charge to begin charging that battery. Each slave charger may communicate a unique identifier to the master controller.

The master controller may be associated with a charging apparatus of similar configuration to the slave chargers. The operational parameters of the charging apparatus associated with the master controller may be included in the collation of the information provided by each of the slave chargers.

The master controller may modify the operational parameters of one or more of the slave chargers if the collated operational information exceeds a threshold level or value. The operational information may include the power consumption of the slave charger. The master controller may sum the power consumption of each of the slave chargers. If the summed power consumption of the slave chargers exceeds a threshold value, the master controller may reduce the charging current being drawn by one or more of the slave chargers. The operation information may include the current and/or voltage consumption of the slave charger. The threshold value may be a maximum current, voltage, or power, level.

The invention may allow a user of a battery charging station, for example, a warehouse foreman, to easily monitor the power consumption of a fleet of battery chargers. Advantageously, the invention may allow the maximum power consumed by a battery charging station to be maintained below a threshold value.

The operation information may include any or all of: the ampere hours returned to a battery being charged; the time elapsed during the charging procedure; the time remaining in the charging procedure; the state of charge; and the battery temperature.

The master controller and slave chargers may be configured for wireless communication. The master controller and slave chargers may be configured for wireless communication via the Zigbee protocol. A slave charger may be configured to receive charging information from a wireless battery control device attached to the battery the slave charger is charging. The wireless battery control device may be a WI-IQ device. The WI-IQ device is available from EnerSys EMEA, EH Europe GmbH, Lowenstrasse 32, 8001 Zurich, Switzerland and additional EnerSys sales entities across the world.

The slave charger may be arranged such that when a battery is connected to the charger, a wireless battery control device controls the charging profile supplied by the slave charger, and communicates the operational parameters to the master controller.

The master controller may indicate which slave chargers are connected to a fully charged battery. The master controller may indicate which slave charger has been connected to a battery for the longest period of time. Such a feature will allow a user to take the battery with the most charge from the battery charging station.

The master controller may comprise a display screen, the display screen configured to display information concerning one or more operational parameters relating to the slave chargers. The master controller may comprise a control unit, the control unit programmable to control the charging operations of the slave chargers. The master controller may comprise an input unit, the input unit connected with the control unit to allow a user to set a threshold value for the collated operation information. The input unit may comprise a touch screen, the touch screen also displaying information concerning one or more operation parameters relating to the slave chargers.

The invention provides, according to a second aspect, a battery charging station comprising:
a master controller; and
a plurality of slave chargers;
the master controller configured to receive information regarding the operational parameters of the slave chargers;
the master controller further comprising a control unit, the control unit configured to send control signals to the slave chargers in dependence on the information received by the master controller.

The battery charging station may include any of the features as described above in relation to the method of operating a battery charging station.

According to a third aspect, the invention provides a battery charging station configured for use in the method as described above.

According to a fourth aspect, the invention provides a master controller for use in a battery charging station, the battery charging station as described above with reference both to the method of operation and apparatus, the master controller configured to receive operational information from a plurality of slave chargers and send control signals to a plurality of slave chargers.

According to a fifth aspect, the invention provides a slave charger for use in a battery charging station, the battery charging station as described above with reference both to the method of operation and apparatus, the slave charger configured to send operation information to a master controller and receive control signals from a master controller.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawing of which:
Figure 1 shows a schematic view of a battery charging station according to a first embodiment of the invention; and
Figure 2 shows a schematic view of a battery charging station according to a second embodiment of the invention.

### Detailed Description

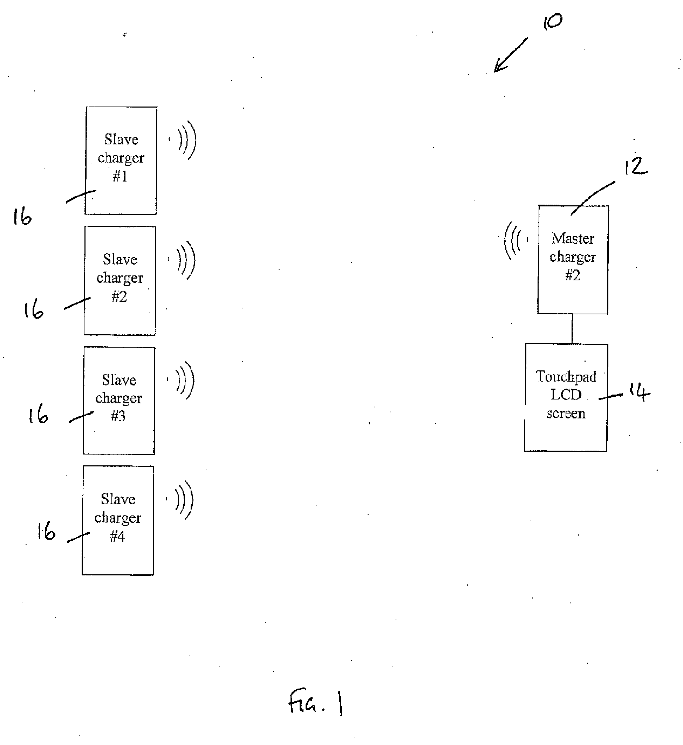

Figure 1 shows a battery charging station 10, comprising a master controller 12, a touch screen 14 associated with the master controller 12, and a plurality of slave chargers 16. The master controller 12 and slave chargers 14 are all configured to be able to wirelessly communicate with each other, in this case using the Zigbee protocol (MESH or Broadcast). However, the person skilled in the art will realise that any suitable wireless communication protocol may be used, or that the master controller 12 and slave chargers 16 may be connected by wires, for wired communication. The slave chargers 16 are connected to a mains power supply from which they draw power to recharge batteries.

Each of the slave chargers 16 is connected to a battery (not shown) and a battery charging operation is then undertaken. Each of the slave chargers 16 is configured to send information relating to the operational parameters of the battery charging operation to the master controller 12. The information includes the power consumption of the slave charger 16, and may include the state of the charging operation. This may comprise any or all of the ampere hours returned to the battery, the time elapsed during the charger, the time remaining of the charge, the level of charge of the battery, and the battery temperature.

The master controller 12 is configured to sum the power consumption of each of the slave chargers to determine the global power consumption of the battery charging station 10. If the battery charging station 10 is drawing greater power than a threshold value, the master controller 12 is arranged to modify the charging profiles being applied by one or more of the slave chargers 16 in order to reduce the overall consumption of the battery charging station 10. The threshold level may be set by the utility company supplying the mains electricity.

The touch screen 14 is configured to allow a user to input control commands to the master controller 12, for example, setting the threshold level described above. The touch screen 14 is also configured to display information relating to the state of charge of the batteries connected to each of the slave chargers 16. For example, the touch screen 14 may indicate which slave chargers 16 are connected to fully charged batteries. The touch screen 14 may indicate which slave charger 16 is connected to the battery with the most charge. Alternatively or additionally, the touch screen may indicate which slave charger 16 has been connected to a battery for the longest time, allowing a first in, first out, method of selection. The touch screen may indicate the temperature of the batteries connected to the slave chargers 16. A user may monitor the temperature of the batteries in this way to ensure that no batteries are being charged in too high or too low a temperature.

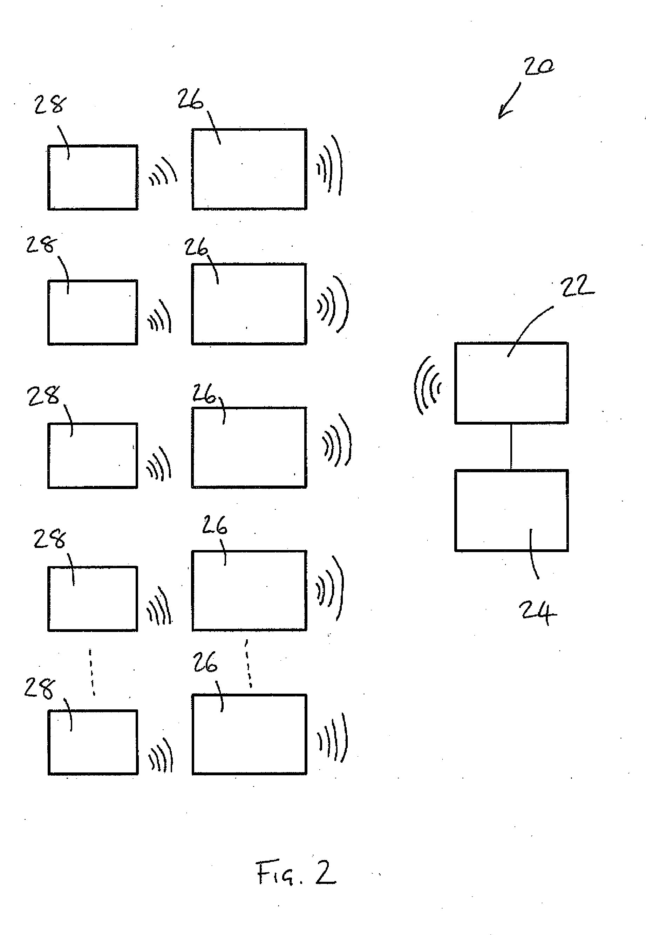

In figure 1, the slave chargers 16 have been described as communicating with the master controller 12, the slave chargers 16 being distinctly separated from the battery to which it is connected. However, in an alternative arrangement, the slave charger 16 may be controlled by a battery control device present on the battery to which the slave charger 16 is connected. Such an arrangement is shown in figure 2. The arrangement is similar to figure 1, with a master controller 22 connected with a touchpad LCD screen 24. A plurality of slave charger 26 is provided and arranged for wireless communication with the master controller 22. Each slave charger 26 is connected to a battery provided with a wireless control device 28, the wireless control device 28 arranged for wireless communication with the associated slave charger 26. The wireless control device 28 may be a WI-IQ device provided with a battery, arranged to transmit the preferred charging profile to the slave charger 26 to which the battery is connected. The battery control device 28 may also be arranged to monitor the operational parameters of the slave charger 26 and send the information to the master controller 22.

Whilst the present invention has been described and illustrated with reference to particular embodiments, it will be appreciated by those of ordinary skill in the art that the invention lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A method of operating a battery charging station, wherein the battery charging station comprises a master controller and a plurality of slave chargers, the master controller configured for communication with the plurality of slave chargers, the method comprising the following steps:
each of the plurality of slave chargers sending operational information to the master controller;
the master controller collating the operational information provided by each of the slave chargers;
the master controller modifying the operational parameters of one or more of the slave chargers in dependence on the collated operational information.

2. A method as claimed in claim 1, wherein each slave charger communicates a unique identifier to the master controller along with the operational information sent to the master controller.

3. A method as claimed in claim 1 or claim 2, wherein the operational information includes the power consumption of the slave charger.

4. A method as claimed in claim 3, wherein the master controller sums the power consumption of each of the slave chargers, and if the summed power consumption of the slave chargers exceeds a threshold value, the master controller reducing the power being drawn by one or more of the slave chargers.

5. A method as claimed in any preceding claim, wherein the operation information includes the current and/or voltage consumption of the slave charger.

6. A method as claimed in any preceding claim, wherein the method includes the step of the master controller reducing the current, voltage, or power being drawn by one or more of the slave chargers, if the summed value of the current, voltage, or power being drawn by the plurality of slave chargers exceeds a threshold value.

7. A method as claimed in any preceding claim, wherein the operation information includes any or all of: the ampere hours returned to a battery being charged; the time elapsed during the charging procedure; the time remaining in the charging procedure; the state of charge; and the battery temperature of a battery connected to a slave charger

8. A method as claimed in any preceding claim, wherein the master controller and slave chargers are configured for wireless communication.

9. A method as claimed in any preceding claim, including the step of the master controller indicating which slave chargers are connected to a fully charged battery.

10. A battery charging station comprising:
a master controller; and
a plurality of slave chargers;
the master controller configured to receive information regarding the operational parameters of the slave chargers;
the master controller further comprising a control unit, the control unit configured to send control signals to the slave chargers in dependence on the information received by the master controller.

11. A battery charging station as claimed in claim 10, wherein the master controller comprises a display screen and an input, the display screen configured to display information regarding the operational parameters of the slave chargers and the input configured to allow a user to modify the control unit.

12. A battery charging station as claimed in claim 9 or claim 10, wherein the master controller and plurality of slave chargers each comprise a wireless communications unit, configured such that the master controller and plurality of slave chargers may communicate wirelessly.

13. A battery charging station configured for use as claimed in any of method claims 1 to 9.

14. A master controller for use in a battery charging station as claimed in any of method claims 1 to 9, or apparatus claims 10 to 12, the master controller configured to receive operational information from a plurality of slave chargers and send control signals to a plurality of slave chargers.

15. A slave charger for use in a battery charging station as claimed in any of method claims 1 to 9, or apparatus claims 10 to 12, the slave charger configured to send operation information to a master charger and receive control signals from a master charger.
